# EUROPEAN PATENT SPECIFICATION

(11) **EP 2 640 823 B1**
(45) Date of publication and mention of the grant of the patent: **14.11.2018**
(21) Application number: 11841225.3
(22) Date of filing: 17.11.2011
(51) Int. Cl.: C12M 1/00, C12Q 1/68, B01L 7/00

(54) **FLOW-THROUGH APPARATUS**
DURCHLAUFVORRICHTUNG
APPAREIL À ÉCOULEMENT CONTINU

(30) Priority: 17.11.2010 HK 10110712
(43) Date of publication of application: 25.09.2013
(73) Proprietor: DiagCor Life Science Limited, Kowloon Bay HongKong (CN)
(72) Inventor: TAM, Wing On, Joseph, Hong Kong (CN)
(74) Representative: inCompass IP Europe Limited
(86) International application number: PCT/IB2011/055154
(87) International publication number: WO 2012/066500

(56) References cited:
- CN-A- 1 436 856
- JP-A- 7 051 099
- US-A- 5 108 603
- US-A- 5 108 603
- US-A- 5 741 647
- US-B1- 6 272 939
- US-B1- 7 015 030

## Description

### Field

The present disclosure relates to flow-through apparatus, and more particularly to flow through apparatus having a reaction chamber for flow-through hybridization. This disclosure also relates to accessories or consumables for flow-through hybridization.

### Background

Identification or detection of nuclei acid molecules, such as DNA, RNA, antigens, antibodies, proteins, receptors, cells, or the like, provides useful information for clinical, diagnostic and medical applications. For example, genotyping provides useful information on genetic disease or genetic disorder for reference by medical professional. However, most identification or detection procedures involving nuclei acid molecules require precisely controlled reaction conditions to provide proper and optimal reactions for specific molecular interactions to take place so that accurate, predictable and/or consistent results can be attained.

For example, where a procedure involves the formation of a double strand helix from their complementary single strand molecules in an intermediate process, perfect (i.e. 100%) matching sequence homology capable of differentiating single base mutation requires very accurate temperature control. Where annealing is done at lower temperature, nonspecific binding will become apparent and imperfect pairing of less homologous sequence fragment giving rise to false detection will result due to formation of hybrid helix.

Nucleic acid hybridization techniques have been increasingly used in the detection of nuclei acid molecules for molecular diagnostic applications, and such techniques are built on the ability of nuclei acid strands of complementary sequences to form duplex hybrids.

A conventional reverse dot-blot hybridization process of nuclei acid is carried out in glass tubes or plastic bags in a temperature controlled hybridization oven, and such a process takes hours or even days to complete.

A flow-through nuclei acid hybridization method described in US 6,638,760 and WO 2007/1 15491 is an improvement to the conventional process. In the improved method, a sample solution containing target analytes is applied to a membrane of porous substrate on which a capture polynucleotide capable of hybridizing a target nuclei acid has been immobilized. A target nuclei acid will be captured and detected when the sample solution flows through the porous substrate.

US5741647 discloses a flow-through apparatus comprising a thermally regulated reaction chamber and an air movement device, wherein the reaction chamber comprises a temperature regulated surface which is adapted to facilitate flow-through hybridization to take place under thermally regulated and controlled conditions, and a thermal assembly comprising an electrical powered active thermal means adapted to heat or cool the temperature regulated surface by conduction; and wherein a plurality of draining apertures adapted to drain excessive or residual liquid inside the reaction chamber is distributed on a bottom surface of the reaction chamber.

The flow-through hybridization technique is attractive because significantly higher signal intensity can be generated within a very short time by using a small volume of reagents with reduced processing time. In addition, this method can be used results can be obtained using low cost membrane-based macro-arrays.

### Summary of Invention

There is provided a flow-through apparatus adapted to carry out flow-through hybridization. In an example, the flow-through apparatus is adapted for desktop use. In an example, the reaction chamber is re-closeable and adapted to receive one or a selected plurality of modular type hybridization cartridges.

In an aspect, there is provided a flow-through apparatus characterized in that the flow-through apparatus is adapted for desktop operation and the reaction chamber is adapted to receive a membrane carrying a modular test cartridge and comprises a re-closable cover; and wherein the re-closable cover is adapted to act against an upstream side of a modular test cartridge when closed to thereby cause a downstream side of the modular test cartridge to press against the bottom surface of the reaction chamber such that sealing means provided on the downstream side of the modular test cartridge will cooperate with the bottom surface of the reaction chamber to form a suction confining seal.

Having a plurality of draining apertures distributed on the reaction surface helps to promote uniformity of suction power on the reaction surface. At the same time, the distributed draining apertures permit the reaction chamber to be partitioned into a plurality of smaller chamber portions on cooperation with the sealing grids formed on the modular cartridges. As such, the use of one or a selected plurality of modular hybridization cartridges on demand base is possible. For example, one or a plurality of modular hybridization cartridges, each may comprise a plurality of testing cells or compartments can be use on a demand bases.

The suction and draining network may be adapted for suction removal of excessive or residual liquid on the bottom surface of the reaction chamber is connected to the suction apertures, the suction and draining network being adapted to provide equalized or uniformized suction power or volumetric suction rate to the plurality of draining apertures. It is noted that uniform suction power promotes a controlled environment which is advantageous for flow through hybridization.

The suction and draining network may comprise a plurality of major pipes, each one of the major pipes being connected to a plurality of the suction apertures via a corresponding plurality of minor pipes; and wherein each major pipe and the plurality of minor pipes connected to that major pipe are arranged such that the suction power or the volumetric suction rate appearing at the suction apertures connected to the plurality of minor pipes is equalized or substantially equalized.

Each of the plurality of minor pipes may extend vertically downwards from the bottom surface of the reaction chamber and joins the major pipe, the major pipe having a main draining outlet at its downstream end. The length of the minor pipe most proximal the main draining outlet is the longest. The length of the minor pipe most distal from the main draining outlet is the shortest. A minor pipe more proximal the main draining outlet is longer than a minor pipe that is more distal from the main draining outlet. Such an arrangement provides a simple way to provide natural draining by gravity when suction power is not available, and at the same time providing suction power equalization.

The major pipe may be tilted such that liquid collected by the minor pipes will flow to the main draining outlet due to gravity when there is no applied suction power, and the degree of tilting of the main draining pipe is determined by the vertical length of the longest minor pipe, the vertical length of the shortest minor pipe, and the separation between the longest and the shortest minor pipes.

The tilting of the major pipe, the lengths of the minor pipes connected to the major pipe, the cross-sectional area of the minor pipes, and the distance of the minor pipes from the main draining outlet may be adapted to obtain a uniform volumetric suction rate at the draining apertures.

In another aspect of the present invention, there is provided a cartridge adapted for use with a flow-through hybridization apparatus such as those described herein, wherein the cartridge comprises a moulded cartridge housing on which there is formed a grid which defines a plurality of testing cells or testing compartments, and on the downstream side of which is mounted a porous membrane; wherein the grid is adapted to facilitate individual hybridization at the individual testing cells or testing compartments.

In an example, sealing means are provided on the downstream side of the grid to provide individual fluid sealing to the individual cells when the cartridge is received inside a reaction chamber of a flow-through apparatus during use.

The sealing on the downstream side of the grid may be adapted to prevent analytes passing from one testing compartment to another.

The portion of the membrane in contact with the downstream side of the grid may be treated, for example, heat treated, to form a sealing means when the membrane is attached to the downstream or bottom side of the cartridge housing.

The membrane is adapted to perform hybridization of a plurality types of target analytes.

A cartridge with a built-in membrane provides a convenient solution for rapid testing and at the same time mitigates potential contamination or cross-contamination due to less human processing steps.

The membrane may be attached to the bottom side of the cartridge housing, and sealing is performed at the time of attachment.

The membrane may comprise a hot-meltable material such as Nylon, and liquid sealing is performed by hot-melt at the time of hot-melt attachment.

The membrane may be treated with a capture probe or capture probes for capturing and displaying a target analyte of a specific or pre-determined sequence.

Examples of capture probes include any gene specific nucleic acid oligonucleotides complementary to the target analyte sequence(s) to form a single dot for single sequence or gene; for multiple dots in the array format wherein each dot has a specific sequence corresponding to the target sequences or genes in question for detection such as HPV genotyping of any single type i.e. type 16 or multiple genotyping assay such as the GenoFlow Array HPV assay for 33 types already in the market and P450-CYP2D6 genotyping reported elsewhere in Patent pendent application (PCT/IB2008/054044) and HLA genotyping classification (USPTO no 7732138 B2). Other examples such as simultaneous assay for multiple types of different viral organism namely a panel assay which include HIV, HBV and HCV viruses in one membrane array and alike.

### Brief Description of Drawings

Exemplary embodiments of the present inventions will be explained by way of example with reference to the accompanying drawings, in which:-
Figure 1 is a perspective view of a flow-through apparatus according to the present disclosure,
Figures 2 and 3 are lateral perspective views of the flow-through apparatus of Figure 1 with an external housing is removed,
Figure 4 is a perspective shown depicting a reaction chamber of the flow-through apparatus of Figure 3 with the chamber cover opened,
Figure 5 is a perspective depicting the reaction chamber of the flow-through apparatus of Figure 3 mounted with 4 modular hybridization cartridges received,
Figure 5A is a plan view depicting a relationship between cartridge cells and distribution of draining apertures on the bottom surface of the reaction chamber of the apparatus of Figure 1,
Figure 6 depicts the reaction chamber of Figure 5 when a clamping device is latched with the 4 modular hybridization cartridges in a testing position,
Figure 7 shows the reaction chamber of Figure 5 when the reclosable window is closed to isolate the modular hybridization cartridges received inside the reaction chamber from the outside environment,

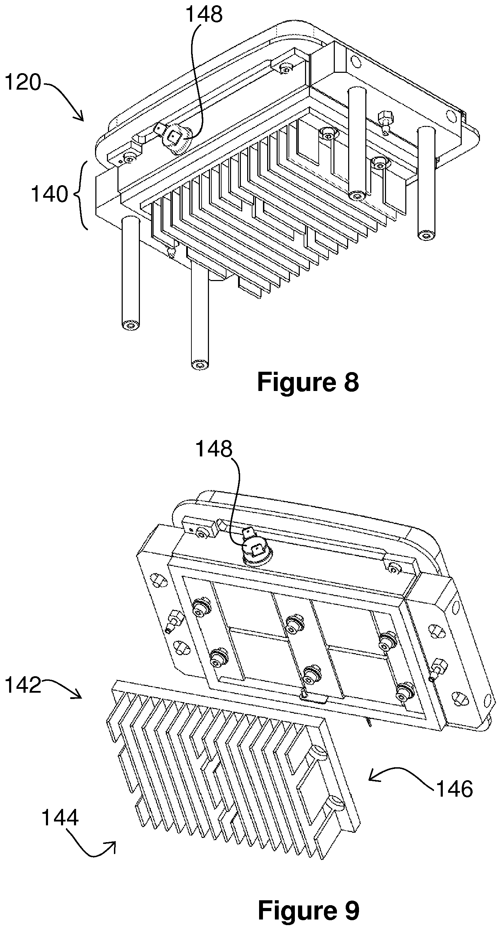

Figure 8 is a bottom perspective view of the reaction chamber of Figure 4,
Figure 9 is a partially exploded view of the reaction chamber of Figure 4 with an integral heat sink device detached,
Figure 10 is a side perspective view of the flow-through apparatus of Figure 1 with the main housing removed and showing an air movement arrangement,
Figure 11 is a longitudinal cross-sectional view of the apparatus of Figure 10,
Figure 12 is a top perspective view of a casted base portion of the reaction chamber of Figure 1 showing the bottom surface of the reaction chamber,
Figure 12A is a plan view showing an enlarged portion of the bottom surface of the reaction chamber,
Figure 12B is a bottom perspective view of Figure 11 depicting a plurality of draining tubes connected to draining apertures distributed on the bottom surface of the reaction chamber,
Figure 13 is a schematic side view depicting a reaction chamber connected with a draining network,
Figure 14 is an enlarged schematic side view depicting a portion of the draining network of Figure 13,
Figures 15 and 15A are first and second top perspective views depicting a modular hybridization cartridge adapted for use with a flow-through apparatus of Figure 1,
Figures 16 and 16A are first and second bottom perspective views of the hybridization cartridge of Figure 15,
Figure 17 is a longitudinal view depicting schematically the mounting of a hybridization cartridge on the reaction chamber, and

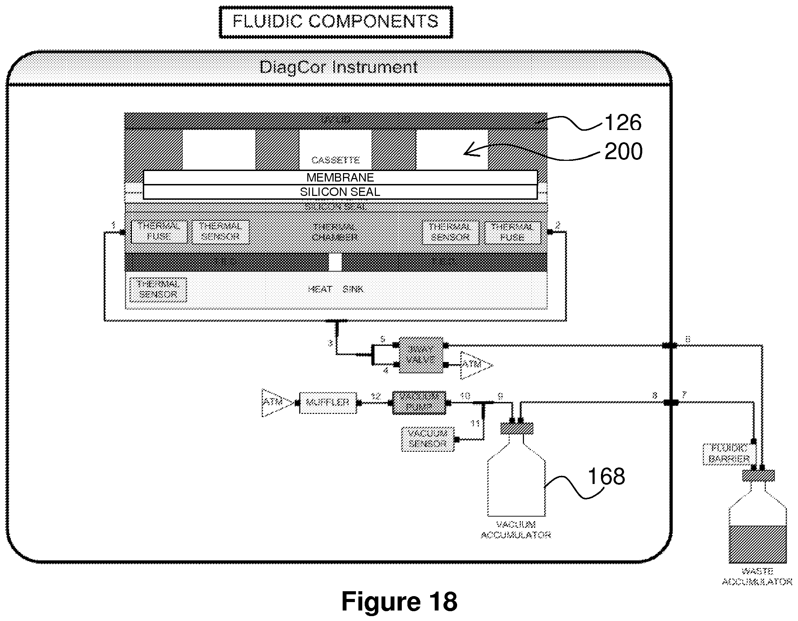

Figure 18 is a schematic diagram illustration the operation of the flow-through apparatus.

### Detailed Description of Exemplary Embodiments

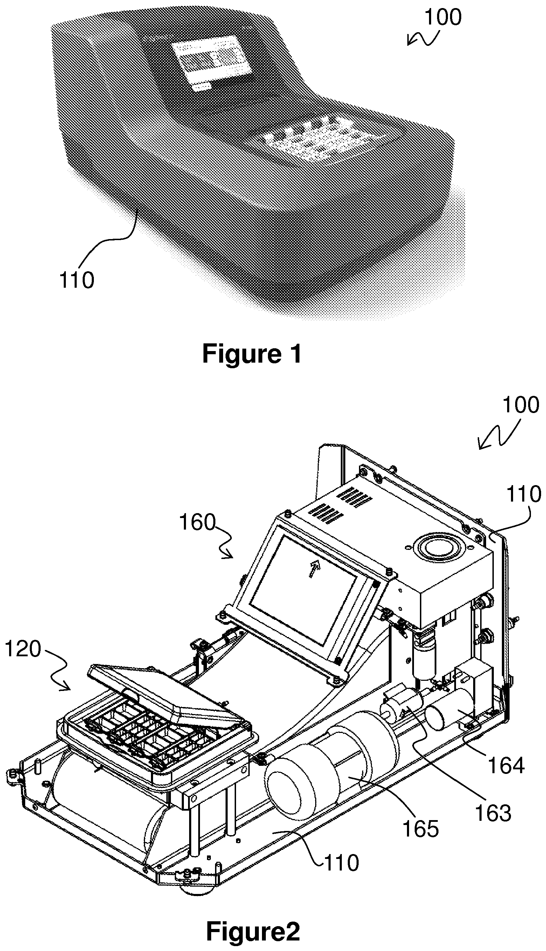

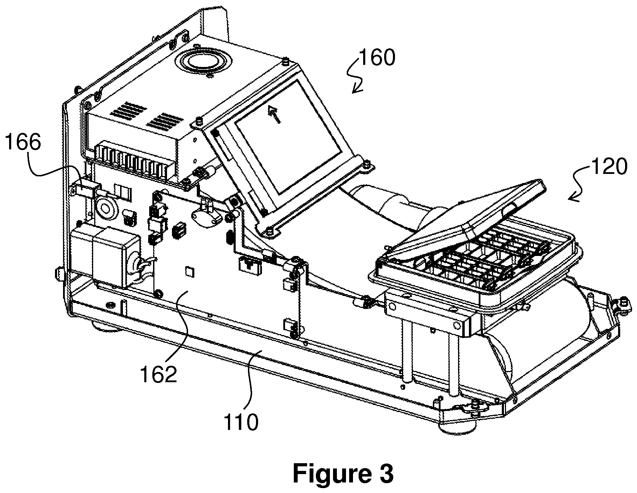

A flow-through apparatus **100** depicted in Figures 1 to 3 comprises a main housing **110** on which there is mounted a reaction chamber **120,** a temperature regulation assembly **140,** a power supply module, a data display monitor **160,** a control board **162,** a vacuum suction pump **164** and other optional or peripheral devices. The peripheral devices include a data communications interface, such as a USB port **166,** a silencer **163,** and a vacuum accumulator **165.**

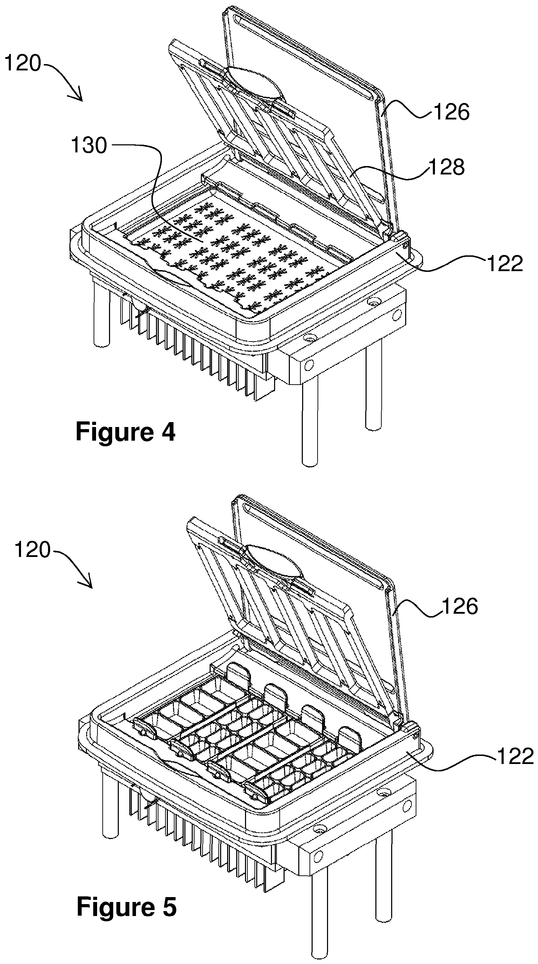

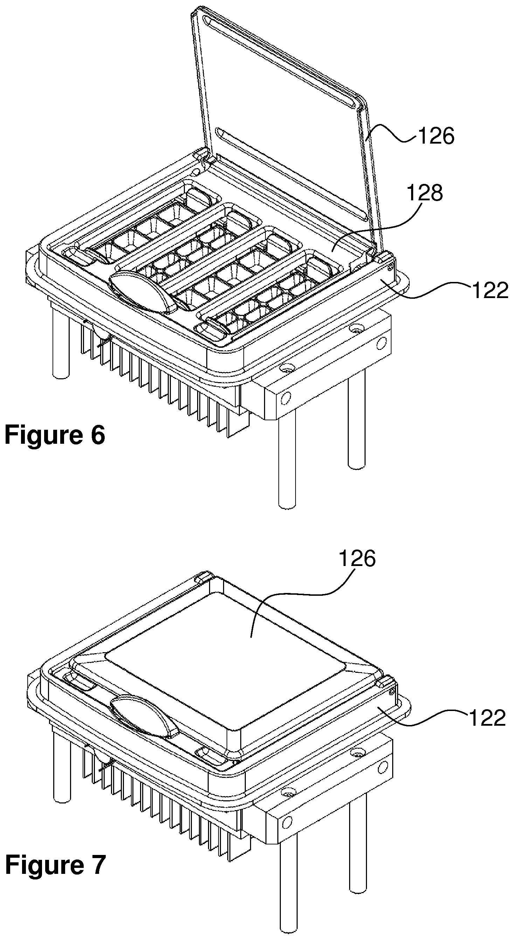

The reaction chamber **120** is adapted to provide an enclosure of controlled environmental conditions to facilitate molecular reactions, such as molecular reactions between a target analyte and test agents. As depicted in more detail in Figures 4, 5 and 6, the reaction chamber **120** comprises a lidded housing enclosure in which a metal block **124** is mounted to form a bottom surface. The housing enclosure comprises a main housing portion **122** which is moulded of hard plastics, a plastic lid or cover **126** which is hingedly connected to the main housing portion **122** and moveable between an open position and a closed position about a hinge axis formed on one side of the main housing portion **122,** and a latching frame **128** which is also hinged to the main housing portion **122** and sharing the same hinge axis with the cover **126.**

The reaction chamber **120** comprises a main reaction compartment which extends between the metal block **124** and the cover **126,** and is surrounded by the side walls of the main housing portion **122.** The cover **126** also includes a transparent window for user observation of the conditions inside the main reaction compartment. The main reaction compartment is adapted to receive modular hybridization cartridges to be explained in more detail below, and the hingedly connected cover **126** is adapted to facilitate insertion or loading of test objects into the reaction chamber for reaction, as well as removal or unloading of the test objects at the end of reaction when the lid is opened. The cover will remain closed when reaction is taking place in order to facilitate reactions under controlled environmental conditions, and to mitigate potential contamination or adverse external or ambient influence.

The base surface **130** of the reaction chamber is an upper surface of the metal block **124.** The metal block, as an example of a thermally conductive block, is made of stainless steel and is adapted to provide a thermal buffer so that the temperature at the base surface ("the reaction surface") **130** can be accurately regulated and maintained to within +/- 0.5 °C or even less of a target temperature during operation. A plurality of through apertures is distributed throughout the metal base surface **130** for draining liquid residuals by vacuum suction. The through apertures, as an example of draining apertures, are connected to a suction and draining network to facilitate removal of excess or residual liquid inside the reaction compartment. The draining apertures are distributed in regular arrays or a regular matrix to facilitate uniform or near uniform suction across the metal base during use when vacuum suction is applied. Apart from draining residual liquid inside the reaction chamber, the uniformed suction power also forms part of a controlled environment by providing and maintaining a uniform or substantially uniform negative pressure to control flowing of target analytes under test through a membrane of a test cartridge.

A portion of the metal block **124** below the base surface **130** protrudes through a window formed on the bottom of the main plastic housing enclosure **122,** and its underside is thermally connected to the temperature regulation assembly **140** to be explained below.

The temperature regulation assembly **140** is adapted to provide a temperature controlled reaction environment inside the reaction compartment of the reaction chamber **120.** This controlled environment is implemented by regulating the temperature of the metal block, thereby also regulating the temperature at the reaction surface **130,** since the reaction surface is the upper surface of the metal block **124.**

The temperature regulation assembly **140** comprises an electric thermal assembly and a forced air conditioning arrangement. The electric thermal assembly comprises a finned metal block **142** having a finned surface **144** and an un-finned surface **146** and a plurality of electric thermal elements 148 such as Peltier elements. The Peltier elements **172,** as an example of electrical powered thermal conditioning elements or thermal electric elements, are mounted to provide electric heating or cooling to the underside of metal block **124,** thereby providing a temperature controlled reaction surface **130.** The underside of the metal block **124** is also thermally connected to an un-finned surface of the finned heat sink **142.** A finned heat sink is used as an example of a finned metal block, and the finned metal block is used as thermal exchanger to promote thermal exchange with external streams of temperature conditioning air to facilitate temperature conditioning of the metal block **124.**

To mitigate undesirable thermal communication between the metal block **124** and the finned metal block **142,** thermal insulators are placed around the space between the metal block **124** and the heat sink **142.** To monitor temperature distribution on the temperature controlled reaction surface to maintain temperature uniformity on the reaction surface, a plurality of temperature sensors is distributed on the underside of the metal block to detect temperature at various spots on the metal base. The output signals of the temperature sensors are sent to an on-board micro-processor on the control board **162** for feedback control of the thermal electric elements **148** according to predetermined controlled conditions stored in the micro-processor.

While the distributed thermal electric elements provide distributed heating or cooling to the reaction surface **130** to promote temperature uniformity on the reaction surface, the present apparatus further include an additional forced air conditioning arrangement to provide thermal conditioning across the reaction base surface by forced air movements to further improve temperature uniformity.

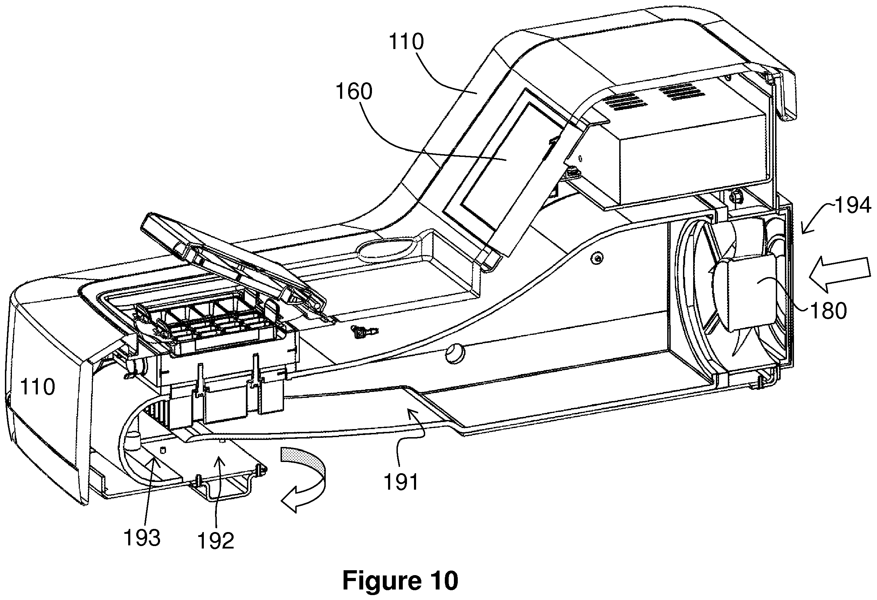

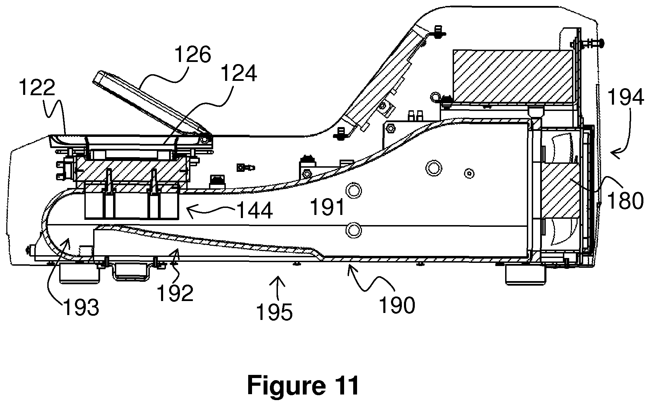

Referring to Figures 10 and 11, the forced air conditioning arrangement comprises an electric fan **180** such as a propeller fan or a centrifugal fan as an example of an air moving source adapted to generate forced air movements, and an air duct **190** coupled to the air moving source for guiding the forced air movements generated by the air moving source to temperature condition the reaction surface. The air duct includes a first duct part **191,** a second duct part **192** and a reversal aperture **193** which is intermediate the first and second duct parts. The first duct part is elongate and extends from an air inlet **194** located at the rear end of the flow through apparatus to the thermal exchanger, with the underside of the thermal exchanger also forming a part, and a distal end, of the first duct part. The first duct part is arranged to guide forced air movements coming from the air inlet to form an air stream and contact the underside of the thermal exchanger for thermal exchange therewith just before reaching the reversal aperture. It will be appreciated that the air stream moves in a direction which is parallel or substantially parallel to the reaction surface when at that distal end when thermal exchange takes place.

So that a slower fan can be used for quieter operation while still providing sufficient thermal exchange capability, the first duct part narrows towards the distal end or the reversal aperture end so that the air stream accelerates towards the thermal exchange to enhance thermal exchange power notwithstanding a slow speed air stream at the air inlet. In order to promote temperature uniformity across the entire underside of the thermal exchange, noting that the thermal content of the air stream is varied as it moves across the underside of the thermal exchanger due to thermal exchange therewith, the first duct part is tapered at its distal end, that is, the end immediately adjacent the reversal aperture, so that the air stream at that distal end further accelerates when it approaches the distal end to bring about thermal uniformity across the entire thermal exchanger. As shown more particularly in Figures 10 and 11, the distal end of the first duct part is defined by the underside of the thermal exchanger and a baffle of the first duct part which tapers towards the reversal aperture as it progress from a proximal side of the thermal exchanger to the distal side, the proximal side being the side proximal the air inlet. As the underside of the thermal exchanger defines a generally planar surface, the baffle end of the first duct part gradually tilts upwards towards the thermal exchanger to form the tapering.

The reversal aperture is located at the distal end of the first duct part (that is, the end of the first duct part most distant from the air inlet) and just before the closed end of the air duct. The reversal aperture provides an exit location to the exhaust air stream so that the exhaust air stream could leave the apparatus after having passed and contacted the underside of the thermal exchanger without encountering or interfering with an incoming air stream. The reversal aperture is defined by a baffle which is defined by a concave closed end of the air duct and a distal end portion of the first duct part which is also the beginning portion of the second duct part. The curvature of the concaved closed end is adapted to help guide the air stream to move or transit more smoothly into the second duct part for exhaust.

The second duct part is immediately below the first duct part **192** and is joined to the first duct part **191** by the reversal aperture **193.** The second duct part is parallel or substantially parallel to the first duct part, and defines a return path which is parallel or substantially parallel to the first duct part, albeit the air stream is in an opposite direction to the incoming air stream. The second duct part, coupled with the reversal aperture, defines a return path so that the exhaust air stream could move in an about-turn direction without encountering or interfering with the incoming stream, and does not have to exit at the front end of the apparatus for user comfort.

An air outlet **195,** or an exhaust outlet, is formed on a side of the second duct part and at a location intermediate the air inlet and the reversal aperture so that the air stream could be exhausted from a lateral side of the apparatus at a direction orthogonal to the incoming stream to minimize interference to the air inlet.

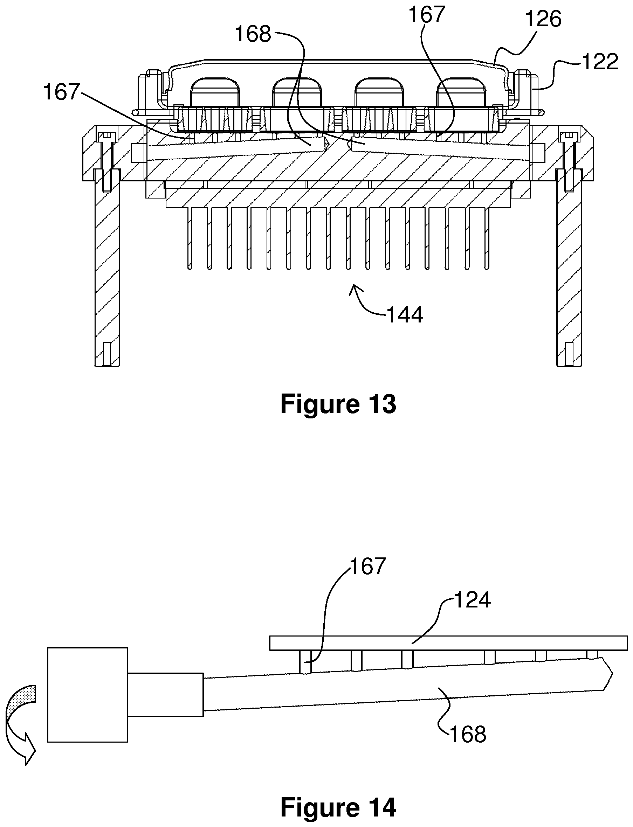

A plurality of through suction apertures **129** is distributed on the base surface **124** to facilitate uniform suction across the entire base surface for suction removal of residual liquid. The through apertures are connected to a suction draining arrangement more particularly depicted in Figures 13 and 14. Each draining arrangement comprises a draining network comprising a plurality of vertical branch or minor drain pipes **167** connected to a main drain pipe **168.** The main drain pipe (or the major pipe) is closed at one end, with the open end connected to a suction source, such as a vacuum pump, and the plurality of branch drain pipes joining the major pipe at locations intermediate the closed and open ends. The major pipe is tilted with respect to the reaction surface towards the open end so that residual liquid reaching the main drain pipe will move to the open end due to gravity even when the suction source is not in operation. Therefore, the open end of the major pipe forms a main draining aperture. Due to the tilting of the major pipe and the substantially horizontal disposition of the reaction surface, the length of the minor pipes is the shortest at the closed end and the longest at the open end. For minor pipes not at the extreme ends, their lengths vary between the shortest and the longest such that the length of a minor pipe closer the open end is longer than that further from the open end, or a minor pipe closer to the closed end is shorter than one which is further away from the closed end.

In addition to draining residual liquid from the reaction chamber by gravity, the tilting of the major pipe in combination with the variable length of the minor pipes also facilitates uniform suction power across the various through apertures joined to the same major pipe. More specifically, the shorter minor pipe lengths at locations more distant from the suction source end would compensate the gradual loss of suction power at the distal end of the major pipe to achieve a more uniform suction power and hence suction rate, especially a more uniformed volumetric suction rate or suction speed.

To further enhance suction power uniformity across the reaction chamber, the reaction chamber is divided into a plurality of sub-sections such that each chamber sub-section is under the suction coverage of a draining network. The distributed draining network helps to bring about a more uniformed suction due to a smaller spatial coverage by each suction draining network.

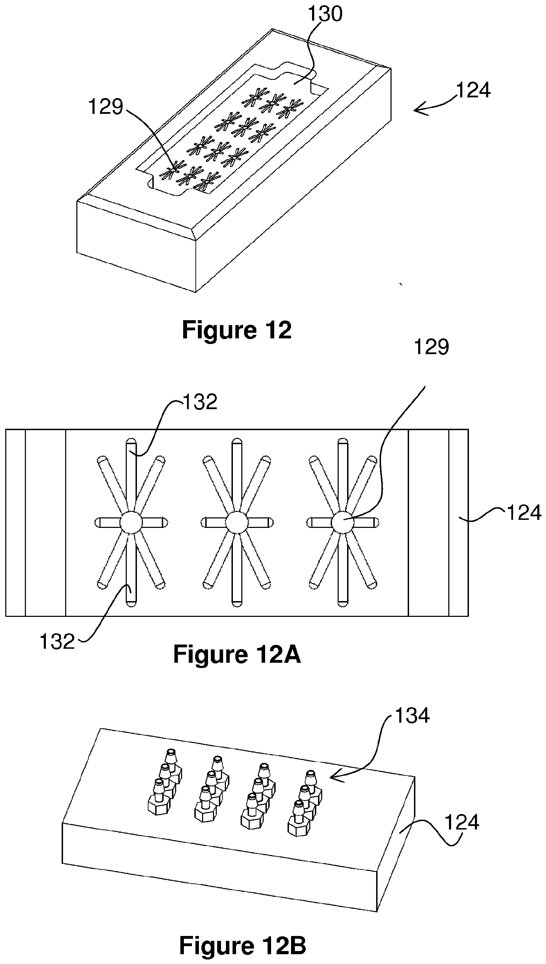

In another exemplary embodiment of the reaction chamber as depicted in Figures12, 12A and 12B, each suction aperture **129** is surrounded by a network of drain channels **132** each of which is in communication with the suction aperture **129.** The network of drain channels is arranged in a radial manner such that each channel extends radially from the suction aperture. The radial, or star-shaped, drain channel arrangement facilitates the distribution or spread of suction power originating from the suction aperture across the footprint of the surrounding channels when the test objects are in place. The channels are exposed grooves and are preferably inclined towards the suction aperture for added efficacy. A plurality of draining tubes **134** are also disposed underneath the metal block **124** for interconnection with the draining networks.

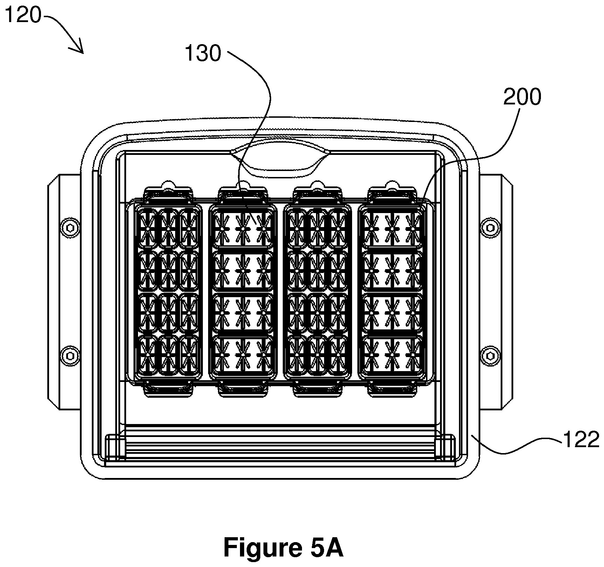

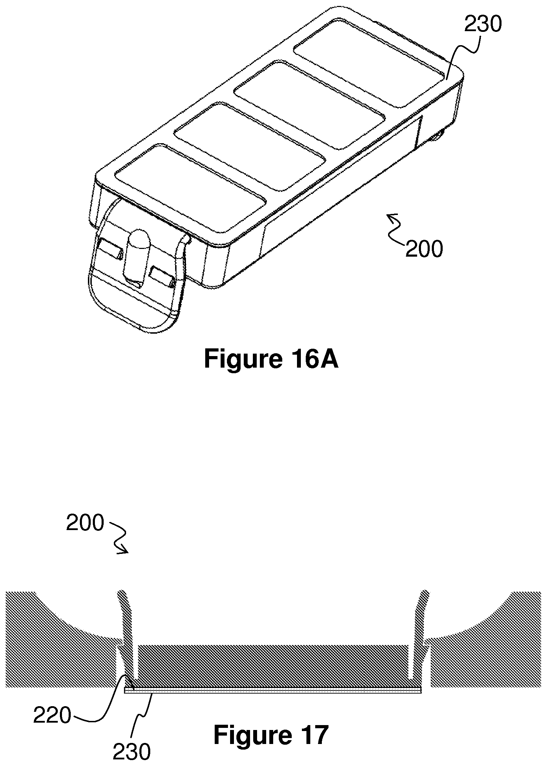

Figures 5A, and 15 - 17 depict exemplary rapid test cartridges which are suitable for use with a reaction chamber of the flow through apparatus described above for rapid and convenient analyte tests to be explained below.

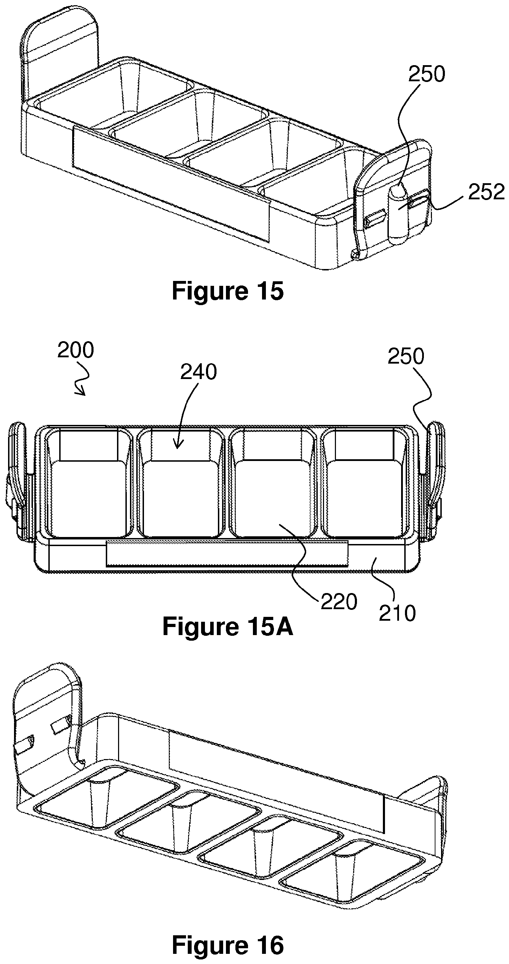

The exemplary hybridization cartridge 200 of Figure 15 comprises a main cartridge body **210,** a membrane **220** attached to the main cartridge body and a sealing member **230.** The main cartridge body is moulded of plastics and includes the boundary of a plurality of test compartments. The plastic body comprises main peripheral walls which collectively define the outer periphery of the cartridge body and partitioning walls which define the individual test compartments in cooperation with the peripheral wall. The peripheral and partitioning walls formed a grid structure and collectively define a plurality of testing wells **240** which form testing compartments after attachment of a porous membrane. The porous membrane is suitable for conducting molecule analyses and is capable of trapping or retaining capture probes for molecule identification as is known to persons skilled in the art. As depicted in Figures 5, and 5A, a single cartridge may have 4 or 12 testing cells or compartments. Of course, other number of test compartments say, between 1 to 16 is useful for most practical applications.

To form a multiple compartment test cartridge, the membrane is attached to the plastic main body, for example, by fusion bonding such as hot melt or ultra-sonic bonding. Fusion bonding is preferred because the fusion bonding process also seals off adjacent compartments so that analytes will not cross flow or leak into an adjacent test compartment to obviate contamination of analytes. An example of suitable materials for the main body and membrane are respectively nylon-based plastic body and nylon-based membrane which demonstrate good fusion and sealing characteristics. To facilitate easy insertion and removal, handle portions **250** are formed at the longitudinal ends of the main cartridge body. The handle portions are integrally moulded on the main body, with the lower end of each of the handle portion hingedly connected to provide resilience to the handle portions. The resilience of the handle portions enables the cartridge to sit tightly inside the reaction chamber and easily removal by urging the free ends of the handle portions towards each other. To further secure the test cartridge inside the reaction chamber, a chamfered protrusion **252** as an example of engagement means is formed on the outer side of the handle portion. The chamfered protrusion is adapted for latching engagement in cooperation with a latching means on the reaction chamber to further secure the cartridge against the reaction surface for stable reaction conditions.

To provide further sealing against cross flow contamination between adjacent compartments and to provide air-tight sealing on the underside of the cartridge to ensure uniform suction, an additional sealing ring, in the form of a sealing template, such as a sealing template made of silicone rubber, is adhered onto the underside of the membrane and following the compartment defining grid to form a sealing gasket.

As depicted in Figures 5, 5A, and each of the cartridges is a test cartridge module and a plurality of 4 test cartridges can be placed inside the reaction chamber. Because of the sealing gasket arrangement, the reaction chamber can operate with one to four cartridge modules in cooperation with the latching means on the reaction chamber. While the cartridge modules depicted herein are of the same outer dimensions, it will be appreciated that the cartridge module size could vary such that the reaction chamber may accommodate 1, 2 or 4 cartridges or a combination of cartridges of different sizes. This modular cartridge design provides enhanced flexibility so that tests could be performed using different types and number of cartridges independently.

As shown in Figure 5A, the cartridge and the reaction chamber are arranged such that when a cartridge is placed inside the reaction chamber, a plurality of suction apertures are aligned with each test well or test compartment to promote uniform suction.

In use, the operating parameters of the flow-through apparatus are set and a cartridge having a membrane treated with a capture probe is placed inside the reaction chamber and secured by the latching arrangement. A target analyte is then applied to the cartridge. The latching mechanism secures the cartridge such that the membrane is proximal to and pressed against the controlled temperature reaction surface to facilitate reaction under a controlled temperature environment when the reaction chamber is closed. When the apparatus is set to operate under operation conditions, hybridization of the target analytes will occur under a uniform suction power to control the flow-through speed. Initial measurements show that a temperature uniformity of about ±0.3% across the entire reaction surface is obtained by the temperature regulation arrangement described herein.

When only a small number of samples are required to be tested, a single or a selected plurality of cartridges less than the maximum number of cartridges receivable inside the reaction chamber is mounted. In such a case, the reaction chamber will be divided into a plurality of reaction compartments in cooperation with the one or the selected plurality of cartridges when the hybridization cartridges are put inside the reaction chamber and latched into operation positions.

While the present invention has been explained with reference to the embodiments above, it will be appreciated by persons skilled in the art that the embodiments are for illustration only and should not be used to restrict the scope of the invention. For example, an embodiment of flow through apparatus described herein includes improvements in relation to temperature conditioning by an exemplary air duct arrangement having a reversal aperture, temperature conditioning by a tapered air duct portion, distributed suction apertures, a draining network comprising a tilted major pipe, a draining network comprising a tilted major pipe in combination with vertical minor pipes of varying length arranged to procure uniform suction, suction channels surrounding a suction aperture to spread suction for suction uniformity; it should be appreciated that such improvements or improved features could be applied independently or in combination without limitation.

**Table of Numerals**

| | | | |
|---|---|---|---|
| 100 | | | Flow-through apparatus |
| | 110 | | Main housing |
| | 120 | | Reaction chamber |
| | | 122 | main housing portion/ main plastic housing enclosure |
| | | 124 | Metal block |
| | | 126 | Lid/ cover |
| | | 128 | Latching frame |
| | | 129 | Suction apertures |
| | 130 | | Chamber base surface/ reaction surface |
| | 132 | | Drain channels |
| | 134 | | Draining tubes |
| | 140 | | Temperature regulation assembly |
| | 142 | | Finned metal block / heat sink |
| | 144 | | Finned surface |
| | 146 | | Unfinned surface |
| | 148 | | Thermal electric elements |
| | 160 | | Display monitor |
| | 162 | | Control board |
| | | 163 | Silencer |
| | | 164 | Vacuum suction pump |
| | | 165 | Vacuum accumulator |
| | | 166 | USB port |
| | | 167 | Branch drain pipes |
| | | 168 | Main drain pipe |
| | 170 | | Heat sink |
| | | 172 | Peltier elements |
| | 180 | | Fan |
| | 190 | | Air duct |
| | | 191 | First duct part |
| | | 192 | Second duct part |
| | | 193 | Reversal aperture |
| | | 194 | Air inlet |
| | | 195 | Air outlet |
| 200 | | | Cartridge |
| | 210 | | Cartridge body |
| | 220 | | Membrane |
| | 230 | | Sealing member |
| | 240 | | Testing well |
| | 250 | | Handle portions |
| | | 252 | Chamfered protrusion |

## Claims

1. A flow-through apparatus (100) comprising a thermally regulated reaction chamber (120) and an air movement device (180), wherein the reaction chamber (120) comprises a temperature regulated surface (130) which is adapted to facilitate flow-through hybridization to take place under thermally regulated and controlled conditions, and a thermal assembly (140) comprising an electrical powered active thermal means (148) adapted to heat or cool the temperature regulated surface (130) by conduction; and wherein a plurality of draining apertures adapted to drain excessive or residual liquid inside the reaction chamber (120) is distributed on a bottom surface of the reaction chamber (120); **characterized in that** the flow-through apparatus (100) is adapted for desktop operation and the reaction chamber (120) is adapted to receive a membrane (220) carrying a modular test cartridge (200) and comprises a re-closable cover (126); and wherein the re-closable cover (126) is adapted to act against an upstream side of a modular test cartridge (200) when closed to thereby cause a downstream side of the modular test cartridge (200) to press against the bottom surface of the reaction chamber (120) such that sealing means (230) provided on the downstream side of the modular test cartridge (200) will cooperate with the bottom surface of the reaction chamber (120) to form a suction confining seal.

2. A flow-through apparatus (100) according to Claim 1, wherein a suction and draining network (167, 168) adapted for suction removal of excessive or residual liquid on the bottom surface of the reaction chamber (120) is connected to suction apertures (129), the suction and draining network being adapted to provide equalized or uniformized suction power or volumetric suction rate to the plurality of draining apertures.

3. A flow-through apparatus (100) according to Claim 2, wherein the suction and draining network comprises a plurality of major pipes (168), each one of the major pipes being connected to a plurality of the suction apertures (129) via a corresponding plurality of minor pipes (167); and wherein each major pipe and the plurality of minor pipes connected to that major pipe are arranged such that the suction power or the volumetric suction rate appearing at the suction apertures connected to the plurality of minor pipes is equalized or substantially equalized.

4. A flow-through apparatus (100) according to Claim 3, wherein each of the plurality of minor pipes (167) extends vertically downwards from the bottom surface of the reaction chamber (120) and joins the major pipe (168), the major pipe having a main draining outlet at its downstream end; wherein the length of the minor pipe most proximal the main draining outlet is the longest, the length of the minor pipe most distal from the main draining outlet is the shortest, and a minor pipe more proximal the main draining outlet is longer than a minor pipe that is more distal from the main draining outlet.

5. A flow-through apparatus (100) according to Claims 3 or 4, wherein the major pipe (168) is tilted such that liquid collected by the minor pipes (167) will flow to the main draining outlet due to gravity when there is no applied suction power, and the degree of tilting of the main draining pipe is determined by the vertical length of the longest minor pipe, the vertical length of the shortest minor pipe, and the separation between the longest and the shortest minor pipes.

6. A flow-through apparatus (100) according to Claim 5, wherein the tilting of the major pipe (168), the lengths of the minor pipes (167) connected to the major pipe, the cross-sectional area of the minor pipes, and the distance of the minor pipes from the main draining outlet are adapted to obtain a uniform volumetric suction rate at the draining apertures.

7. A flow-through apparatus (100) according to any preceding Claim, wherein the major pipes (168) of the suction and draining network comprises a first group of major pipes responsible for a first portion of the bottom surface and a second group of major pipes responsible for a second portion of the bottom surface, the main draining outlets of the first group and the main draining outlets of the second group of major pipes being on opposite sides of the reaction chamber (120).

8. A flow-through apparatus (100) according to preceding Claim, wherein the draining aperture is connected to at least one open draining channel (132), the open draining channel being formed on the bottom surface of the reaction chamber (120) and adapted for distributedly collecting and guiding liquid on the bottom surface to flow into the draining aperture at its downstream end.

9. A flow-through apparatus (100) according to Claim 8, wherein the open draining channel (132) slopes towards the draining aperture.

10. A flow-through apparatus (100) according to Claims 8 or 9, wherein a plurality of the open draining channels (132) is connected to the draining aperture, and the draining channels are distributed around the draining aperture to spread suction coming from the draining aperture along the open draining channels during use when the membrane (220) is placed on the bottom surface of the reaction chamber (120) and suction is applied through the draining apertures.

11. A flow-through apparatus (100) according to any of Claims 8 to 10, wherein the draining channels (132) are evenly distributed around each suction aperture (129) in a radial manner or in a star shape.

12. A flow-through apparatus (100) according to any preceding Claim, wherein a suction or vacuum reservoir is connected to the plurality of suction apertures (129) and operable to provide standby suction to the suction apertures.

13. A flow-through apparatus (100) according to any preceding Claim, wherein the plurality of draining apertures on the bottom surface of the reaction chamber (120) is distributed on a regular rectangular matrix such that the draining apertures contained by the sealing means (230) of a modular test cartridge (200) adapted for use with the apparatus are evenly distributed under downstream side of the cartridge.

14. A flow-through apparatus (100) according to any preceding Claim, wherein the reaction chamber (120) is adapted to receive a plurality of modular test cartridges (200), wherein the cover (126) is adapted to individually act against each one of the plurality of modular test cartridges to provide individual suction confinement.

15. A flow-through apparatus (100) according to any preceding Claim, wherein the apparatus comprises a rigid housing (110); wherein the reaction chamber (120) is mounted on a top surface of the housing and adapted to receive modular test cartridges, and a display (160) to facilitate user-apparatus interaction is provided behind the reaction chamber such that the reaction chamber is intermediate a user and the display during use; and wherein the reaction chamber comprises a moveable cover which is adapted to facilitate loading or unloading of test cartridges.

16. A flow-through apparatus (100) according to any preceding claim, wherein a plurality of releasable latching means is disposed on the apparatus for releasably latching a plurality of cartridges (200) independently on the reaction chamber (120).

17. A flow-through apparatus (100) according to any preceding Claim, wherein the reaction chamber (120) is re-closeable, and the temperature regulated surface (130) is part of an integrally moulded metal block (124) formed with a plurality of regularly distributed draining apertures; and wherein the thermal assembly (140) comprises a heat sink (142) having a finned surface which also forms a second surface.

18. A flow-through apparatus according (100) to any of Claims 1-17, wherein the cartridge (200) comprises a moulded cartridge housing on which there is formed a grid which defines a plurality of testing cells or testing compartments (240), and on the downstream side of which is mounted a porous membrane; and wherein the grid is adapted to facilitate individual hybridization at the individual testing cells or testing compartments, wherein the reaction chamber (120) and the cartridge are arranged such that a testing compartment defined by a grid on the cartridge is aligned with at least one suction aperture (129) on the reaction chamber.

## Patentansprüche

1. Durchflussgerät (100) umfassend eine thermisch geregelte Reaktionskammer (120) und eine Luftbewegungsvorrichtung (180), worin die Reaktionskammer (120) eine temperaturgeregelte Oberfläche (130) umfasst, die so ausgelegt ist, eine unter thermisch geregelten und kontrollierten Bedingungen stattfindende Durchflusshybridisierung zu ermöglichen, und eine thermische Baugruppe (140), umfassend ein elektrisch angetriebenes aktives thermisches Mittel (148), das so ausgelegt ist, die temperaturregulierte Oberfläche (130) durch Wärmeleitung zu erwärmen oder zu kühlen; und worin eine Vielzahl von Ablassöffnungen, die so ausgelegt sind, übermäßige oder restliche Flüssigkeit innerhalb der Reaktionskammer (120) abzulassen, auf einer Bodenfläche der Reaktionskammer (120) verteilt sind; **dadurch gekennzeichnet, dass** das Durchflussgerät (100) für den Betrieb auf einer Arbeitsfläche ausgelegt ist und die Reaktionskammer (120) so ausgelegt ist, eine Membran (220) aufzunehmen, die eine modulare Testpatrone (200) trägt, und eine wiederverschließbare Abdeckung (126) umfasst; und worin die wiederverschließbare Abdeckung (126) so ausgelegt ist, im geschlossenen Zustand gegen eine stromaufwärtige Seite einer modularen Testpatrone (200) zu wirken, um dadurch zu bewirken, dass eine stromabwärtige Seite der modularen Testpatrone (200) gegen die Bodenfläche der Reaktionskammer (120) drückt, sodass an der stromabwärtigen Seite der modularen Testpatrone (200) bereitgestellte Dichtmittel (230) mit der Bodenfläche der Reaktionskammer (120) zusammenarbeiten, um eine saugbegrenzende Dichtung zu bilden.

2. Durchflussgerät (100) nach Anspruch 1, worin ein zur Saugentfernung übermäßiger oder restlicher Flüssigkeit auf der Bodenfläche der Reaktionskammer (120) ausgelegtes Saug- und Ablassnetz (167, 168) mit Saugöffnungen (129) verbunden ist, wobei das Saug- und Ablassnetz so ausgelegt ist, der Vielzahl von Ablassöffnungen eine ausgeglichene oder einheitliche Saugkraft oder volumetrische Saugleistung bereitzustellen.

3. Durchflussgerät (100) nach Anspruch 2, worin das Saug- und Ablassnetz eine Vielzahl von Hauptleitungen (168) umfasst, wobei jede der Hauptleitungen über eine entsprechende Vielzahl von Nebenleitungen (167) mit einer Vielzahl der Ablassöffnungen (129) verbunden ist; und worin jede Hauptleitung und die Vielzahl der mit dieser Hauptleitung verbundenen Nebenleitungen so angeordnet sind, dass die Saugkraft oder die volumetrische Saugleistung, die an den mit der Vielzahl der Nebenleitungen verbundenen Saugöffnungen auftritt, ausgeglichen oder im Wesentlichen ausgeglichen wird.

4. Durchflussgerät (100) nach Anspruch 3, worin jede der Vielzahl von Nebenleitungen (167) sich von der Bodenfläche der Reaktionskammer (120) vertikal nach unten erstreckt und in die Hauptleitung (168) mündet, wobei die Hauptleitung an ihrem stromabwärtigen Ende einen Hauptablassauslass aufweist; worin die Länge der dem Hauptablassauslass am nächsten liegenden Nebenleitung die längste ist, die Länge der dem Hauptablassauslass am entferntesten liegenden Nebenleitung die kürzeste ist und eine dem Hauptablassauslass näher liegende Nebenleitung länger als eine Nebenleitung ist, die entfernter von dem Hauptablassauslass ist.

5. Durchflussgerät (100) nach Anspruch 3 oder 4, worin die Hauptleitung (168) so geneigt ist, dass die von den Nebenleitungen (167) gesammelte Flüssigkeit aufgrund der Schwerkraft zum Hauptablassauslass fließt, wenn keine aufgebrachte Saugkraft vorhanden ist, und der Grad der Neigung der Hauptablassleitung durch die vertikale Länge der längsten Nebenleitung, die vertikale Länge der kürzesten Nebenleitung und den Abstand zwischen der längsten und kürzesten Nebenleitung bestimmt wird.

6. Durchflussgerät (100) nach Anspruch 5, worin die Neigung der Hauptleitung (168) die Längen der mit der Hauptleitung verbundenen Nebenleitungen (167), die Querschnittsfläche der Nebenleitungen, die Entfernung der Nebenleitungen von dem Hauptablassauslass so ausgelegt sind, eine einheitliche volumetrische Saugleistung an den Ablassöffnungen zu erhalten.

7. Durchflussgerät (100) nach einem vorstehenden Anspruch, worin die Hauptleitungen (168) des Saug- und Ablassnetzes eine erste Gruppe von Hauptleitungen, die für einen ersten Teil der Bodenfläche verantwortlich sind, und eine zweite Gruppe von Hauptleitungen umfassen, die für einen zweiten Teil der Bodenfläche verantwortlich sind, wobei die Hauptablassauslässe der ersten Gruppe und die Hauptablassauslässe der zweiten Gruppe von Hauptleitungen sich an gegenüberliegenden Seiten der Reaktionskammer (120) befinden.

8. Durchflussgerät (100) nach dem vorstehenden Anspruch, worin die Ablassöffnung mit mindestens einem offenen Ablasskanal (132) verbunden ist, wobei der offene Ablasskanal auf der Bodenfläche der Reaktionskammer (120) gebildet und zum verteilten Sammeln und Leiten von Flüssigkeit auf der Bodenfläche ausgelegt ist, damit diese in die Ablassöffnung an seinem stromabwärtigen Ende fließt.

9. Durchflussgerät (100) nach Anspruch 8, worin der offene Ablasskanal (132) zur Ablassöffnung hin abfällt.

10. Durchflussgerät (100) nach Anspruch 8 oder 9, worin eine Vielzahl der offenen Ablasskanäle (132) mit der Ablassöffnung verbunden ist und die Ablasskanäle rund um die Ablassöffnung verteilt sind, um die von der Ablassöffnung kommende Saugwirkung entlang der offenen Ablasskanäle während der Verwendung zu verbreiten, wenn die Membran (220) auf der Bodenfläche der Reaktionskammer (120) platziert ist und Saugwirkung durch die Ablassöffnungen aufgebracht wird.

11. Durchflussgerät (100) nach einem der Ansprüche 8 bis 10, worin die Ablasskanäle (132) radial oder sternenförmig gleichmäßig rund um jede Saugöffnung (129) verteilt sind.

12. Durchflussgerät (100) nach einem vorstehenden Anspruch, worin ein Saug- oder Vakuumbehälter mit der Vielzahl von Saugöffnungen (129) verbunden und so betriebsfähig ist, dass den Saugöffnungen eine Standby-Saugwirkung bereitgestellt wird.

13. Durchflussgerät (100) nach einem vorstehenden Anspruch, worin die Vielzahl von Ablassöffnungen auf der Bodenfläche der Reaktionskammer (120) so auf einer regelmäßigen rechteckigen Matrix verteilt ist, dass die Ablassöffnungen, die in den Dichtmitteln (230) einer zur Verwendung mit dem Gerät ausgelegten modularen Testpatrone (200) enthalten sind, gleichmäßig unter der stromabwärtigen Seite der Patrone verteilt sind.

14. Durchflussgerät (100) nach einem vorstehenden Anspruch, worin die Reaktionskammer (120) so ausgelegt ist, eine Vielzahl von modularen Testpatronen (200) aufzunehmen, worin die Abdeckung (126) so ausgelegt ist, einzeln gegen jede der Vielzahl von modularen Testpatronen zu wirken, um eine einzelne Saugbegrenzung bereitzustellen.

15. Durchflussgerät (100) nach einem vorstehenden Anspruch, worin das Gerät ein steifes Gehäuse (110) umfasst; worin die Reaktionskammer (120) auf einer oberen Oberfläche des Gehäuses montiert und so ausgelegt ist, modulare Testpatronen aufzunehmen, und ein Display (160) zur Ermöglichung der Interaktion zwischen Anwender und Gerät so hinter der Reaktionskammer bereitgestellt ist, dass die Reaktionskammer während der Verwendung zwischen einem Anwender und dem Display liegt; und worin die Reaktionskammer eine bewegliche Abdeckung umfasst, die so ausgelegt ist, das Laden oder Entladen von Testpatronen zu ermöglichen.

16. Durchflussgerät (100) nach einem vorstehenden Anspruch, worin eine Vielzahl von lösbaren Verriegelungsmitteln auf dem Gerät vorgesehen ist, um eine Vielzahl von Patronen (200) unabhängig auf der Reaktionskammer (120) lösbar zu verriegeln.

17. Durchflussgerät (100) nach einem vorstehenden Anspruch, worin die Reaktionskammer (120) wiederverschließbar ist und die temperaturgeregelte Oberfläche (130) Teil eines angespritzten Metallblocks (124) ist, der mit einer Vielzahl regelmäßig verteilter Ablassöffnungen geformt ist; und worin die thermische Baugruppe (140) einen Kühlkörper mit einer gerippten Oberfläche umfasst, der außerdem eine zweite Oberfläche bildet.

18. Durchflussgerät (100) nach einem der vorstehenden Ansprüche 1-17, worin die Patrone (200) ein gespritztes Patronengehäuse umfasst, auf dem ein Gitter gebildet ist, das eine Vielzahl von Testzellen oder Testfächern (240) definiert, und an dessen stromabwärtiger Seite eine poröse Membran montiert ist; und worin das Gitter so ausgelegt ist, die einzelne Hybridisierung an den einzelnen Testzellen oder Testfächern zu ermöglichen, worin die Reaktionskammer (120) und die Patrone so angeordnet sind, dass ein von einem Gitter auf der Patrone definiertes Testfach gegenüber mindestens einer Saugöffnung (129) auf der Reaktionskammer ausgerichtet ist.

## Revendications

1. Un appareil à flux traversant (100) comprenant une chambre de réaction régulée thermiquement (120) et un dispositif à mouvement d'air (180), dans lequel la chambre de réaction (120) comprend une surface à température régulée (130) qui est adaptée pour faciliter l'hybridation à flux traversant dans des conditions thermiquement régulées et contrôlées, et un ensemble thermique (140) comprenant un moyen thermique actif électrique (148) adapté pour chauffer ou refroidir la surface à température régulée (130) par conduction ; et dans lequel une pluralité d'ouvertures de drainage adaptées pour drainer le liquide excédentaire ou résiduel à l'intérieur de la chambre de réaction (120) sont réparties sur une surface inférieure de la chambre de réaction (120) ; **caractérisé en ce que** l'appareil à flux traversant (100) est adapté pour un fonctionnement sur un plan de travail et la chambre de réaction (120) est adaptée pour recevoir une membrane (220) portant une cartouche de test modulaire (200) et comportant un couvercle refermable (126) ; et dans lequel le couvercle refermable (126) est adapté pour agir contre un côté amont d'une cartouche de test modulaire (200) lorsqu'il est fermé pour faire en sorte qu'un côté aval de la cartouche de test modulaire (200) appuie contre la surface inférieure de la chambre à réaction (120) de telle façon que le moyen d'étanchéité (230) prévu sur le côté aval de la cartouche de test modulaire (200) agit avec la surface inférieure de la chambre de réaction (120) pour former un joint de confinement de l'aspiration.

2. Un appareil à flux traversant (100) selon la revendication 1, dans lequel un réseau d'aspiration et de drainage (167, 168) adapté pour l'élimination par aspiration du liquide excédentaire ou résiduel sur la surface inférieure de la chambre de réaction (120) est connecté à des ouvertures d'aspiration (129), le réseau d'aspiration et de drainage étant adapté pour fournir une puissance d'aspiration ou un taux d'aspiration volumétrique égalisé ou uniformisé à la pluralité d'ouvertures de drainage.

3. Un appareil à flux traversant (100) selon la revendication 2, dans lequel le réseau d'aspiration et de drainage comprend une pluralité de tuyaux majeurs (168), chacun des tuyaux majeurs étant connecté à une pluralité d'ouvertures d'aspiration (129) par le biais d'une pluralité de tuyaux mineurs correspondants (167) ; et dans lequel chaque tuyau majeur et la pluralité de tuyaux mineurs connectés à ce tuyau majeur sont disposés de telle sorte que la puissance d'aspiration ou le taux d'aspiration volumétrique apparaissant aux ouvertures d'aspiration connectées à la pluralité de tuyaux mineurs soit égalisé ou substantiellement égalisé.

4. Un appareil à flux traversant (100) selon la revendication 3, dans lequel chacun de la pluralité de tuyaux mineurs (167) s'étend verticalement vers le bas à partir de la surface inférieure de la chambre de réaction (120) et rejoint le tuyau majeur (168), le tuyau majeur ayant un orifice de drainage principal à son extrémité aval ; dans lequel la longueur du tuyau mineur le plus proximal de l'orifice de drainage principal est la plus longue, la longueur du tuyau mineur le plus distal de l'orifice de drainage principal est la plus courte, et un tuyau mineur plus proximal de l'orifice de drainage principal est plus long qu'un tuyau mineur qui est plus distal de l'orifice de drainage principal.

5. Un appareil à flux traversant (100) selon la revendication 3 ou 4, dans lequel le tuyau majeur (168) est incliné de façon à ce que le liquide collecté par les tuyaux mineurs (167) s'écoule vers l'orifice de drainage principal par gravité lorsqu'aucune puissance d'aspiration n'est appliquée, et le degré d'inclinaison du tuyau de drainage principal est déterminé par la longueur verticale du tuyau mineur le plus long, et la séparation entre les tuyaux mineurs le plus long et le plus court.

6. Un appareil à flux traversant (100) selon la revendication 5, dans lequel l'inclinaison du tuyau majeur (168), les longueurs des tuyaux mineurs (167) connectés au tuyau majeur, la section transversale des tuyaux mineurs, et la distance entre les tuyaux mineurs et l'orifice de drainage principal sont adaptées pour obtenir un taux d'aspiration volumétrique uniforme aux ouvertures de drainage.

7. Un appareil à flux traversant (100) selon l'une quelconque des revendications précédentes, dans lequel les tuyaux majeurs (168) du réseau d'aspiration et de drainage se composent d'un premier groupe de tuyaux majeurs chargés d'une première portion de la surface inférieure et d'un deuxième groupe de tuyaux majeurs chargés d'une deuxième portion de la surface inférieure, les orifices de drainage principaux du premier groupe et les orifices de drainage principaux du deuxième groupe de tuyaux majeurs étant situés sur des côtés opposés de la chambre de réaction (120).

8. Un appareil à flux traversant (100) selon la revendication précédente, dans lequel l'ouverture de drainage est connectée à au moins un canal de drainage ouvert (132), le canal de drainage ouvert étant formé sur la surface inférieure de la chambre de réaction (120) et adapté afin de collecter et guider selon une répartition le liquide sur la surface inférieure pour qu'il s'écoule dans l'ouverture de drainage à son extrémité aval.

9. Un appareil à flux traversant (100) selon la revendication 8, dans lequel le canal de drainage ouvert (132) est incliné vers l'ouverture de drainage.

10. Un appareil à flux traversant (100) selon la revendication 8 ou 9, dans lequel une pluralité de canaux de drainage ouverts (132) sont connectés à l'ouverture de drainage, et les canaux de drainage sont répartis autour de l'ouverture de drainage afin de propager l'aspiration venant de l'ouverture de drainage le long des canaux de drainage ouverts pendant l'utilisation lorsque la membrane (220) est placée sur la surface inférieure de la chambre de réaction (120) et l'aspiration est appliquée à travers les ouvertures de drainage.

11. Un appareil à flux traversant (100) selon l'une quelconque des revendications de 8 à 10, dans lequel les canaux de drainage (132) sont répartis de manière égale autour de chaque ouverture d'aspiration (129) de manière radiale ou en forme d'étoile.

12. Un appareil à flux traversant (100) selon l'une quelconque des revendications précédentes, dans lequel un réservoir d'aspiration ou de vide est connecté à la pluralité d'ouvertures d'aspiration (129) et utilisable pour fournir une aspiration de secours aux ouvertures d'aspiration.

13. Un appareil à flux traversant (100) selon l'une quelconque des revendications précédentes, dans lequel la pluralité d'ouvertures de drainage sur la surface inférieure de la chambre de réaction (120) sont réparties sur une matrice rectangulaire régulière de façon à ce que les ouvertures de drainage confinées par le moyen d'étanchéité (230) d'une cartouche de test modulaire (200) adaptée pour l'utilisation avec l'appareil sont réparties de manière égale sous le côté aval de la cartouche.

14. Un appareil à flux traversant (100) selon l'une quelconque des revendications précédentes, dans lequel la chambre de réaction (120) est adaptée pour recevoir une pluralité de cartouches de test modulaires (200), dans lequel le couvercle (126) est adapté pour agir individuellement contre chacune de la pluralité de cartouches de test modulaires afin d'assurer un confinement individuel de l'aspiration.

15. Un appareil à flux traversant (100) selon l'une quelconque des revendications précédentes, dans lequel l'appareil comprend un boîtier rigide (110) ; dans lequel la chambre de réaction (120) est montée sur une surface supérieure du boîtier et adaptée pour recevoir des cartouches de test modulaires, et un afficheur (160) pour faciliter l'interaction utilisateur-appareil se trouve derrière la chambre de réaction de façon à ce que la chambre de réaction soit entre un utilisateur et l'afficheur pendant l'utilisation ; et dans lequel la chambre de réaction comprend un couvercle mobile qui est adapté pour faciliter le chargement et déchargement de cartouches de test.

16. Un appareil à flux traversant (100) selon l'une quelconque des revendications précédentes, dans lequel une pluralité de moyens de verrouillage déblocables sont disposés sur l'appareil pour verrouiller de manière déblocable une pluralité de cartouches (200) indépendamment sur la chambre de réaction (120).

17. Un appareil à flux traversant (100) selon l'une quelconque des revendications, précédentes, dans lequel la chambre de réaction (120) est refermable, et la surface à température régulée (130) fait partie d'un bloc métallique intégralement moulé (124) formé avec une pluralité d'ouvertures de drainage réparties de manière régulière ; et dans lequel l'ensemble thermique (140) comprend un puits thermique (142) ayant une surface à ailettes qui forme également une seconde surface.

18. Un appareil à flux traversant (100) selon l'une quelconque des revendications de 1 à 17, dans lequel la cartouche (200) comprend un logement de cartouche moulé sur lequel est formée une grille qui définit une pluralité de cellules de test ou compartiments de test (240), et sur le côté aval duquel est montée une membrane poreuse ; et dans lequel la grille est adaptée pour faciliter l'hybridation individuelle au niveau des cellules de test ou compartiments de test individuels, dans lequel la chambre de réaction (120) et la cartouche sont disposées de façon à ce qu'un compartiment de test défini par une grille sur la cartouche est aligné avec au moins une ouverture d'aspiration (129) sur la chambre de réaction.
